# EUROPÄISCHE PATENTSCHRIFT

(11) **EP 1 402 772 B1**
(45) Veröffentlichungstag und Bekanntmachung des Hinweises auf die Patenterteilung: **01.02.2006**
(21) Anmeldenummer: 03027252.0
(22) Anmeldetag: 08.03.2000
(51) Int. Cl.: A01K 9/00

(54) **Verfahren zum Kontrollieren des Zustandes von Säugetieren**
Process for verifying the state of mammals
Procédé pour la surveillance de l'état des mammifères

(30) Priorität: 17.03.1999 DE 19912026; 27.10.1999 DE 19951690; 17.12.1999 DE 19960943
(43) Veröffentlichungstag der Anmeldung: 31.03.2004
(62) Teilanmeldung aus: 00912565.9
(73) Patentinhaber: Förster, Martin, 78234 Engen (DE)
(72) Erfinder: Förster, Martin, 78234 Engen (DE)
(74) Vertreter: Weiss, Peter

(56) Entgegenhaltungen:
- WO-A-91/17652
- WO-A-97/15185
- DE-A- 3 610 960
- DE-A- 19 710 342

## Beschreibung

Die Erfindung betrifft ein Verfahren zum Kontrollieren des Zustandes, insbesondere des Gesundheitszustandes, von Säugetieren, insbesondere von landwirtschaftlichen Nutztieren, welche an einem Nuckel, dem ein Temperatursensor zugeordnet ist, ein Nahrungsmittel saugen.

Beispielsweise bei der heutigen Kälberaufzucht ist es unumgänglich, dass laufend der Zustand der Zuchttiere ermittelt wird. Aus der DE 197 10 342.1 ist beispielsweise eine Vorrichtung und ein Verfahren für die automatische Erfassung der Körpertemperatur bei landwirtschaftlichen Nutztieren mit Alarmfunktion bekannt, wobei in dem Milchtränkenuckel ein Temperaturfühler integriert ist.

In der Praxis haben sich dabei jedoch verschiedene Schwierigkeiten herausgestellt. Zum einen werden die Temperatursensoren von den Tieren verbissen, weshalb sie sicher geschützt werden müssen, ohne dass die Messwerte bzw. die Messzeiten beeinträchtigt werden. In vielen Fällen nehmen die Tiere auch den Nuckel und damit den Temperatursensor nicht immer vollständig ins Maul, so dass auch hier die Messergebnisse verfälscht werden. Eine Verfälschung der Messergebnisse tritt auch durch das Tränkemedium selbst und durch mitgesaugte Luft ein. Wenn beispielsweise die Milch sehr warm ist, wird die Temperatur der Milch, jedoch nicht die Körpertemperatur des Tieres ermittelt.

In vielen Fällen sind auch die Zeiten für die zuverlässigen Messungen zu kurz.

Die WO-A-97 15 185 offenbart eine Vorrichtung zum Füttern von Tieren, bei welcher eine Zuleitung zu einem Nuckel in einer schwenkbaren Halterung geführt ist. In dieser Halterung ist eine Heizeinrichtung vorgesehen, welche die innere Zuleitung zum Nuckel erwärmen kann, damit keine Temperaturverluste des Nahrungsmittels auftreten und ggf. die Temperatur des austretenden Nahrungsmittels nachgeregelt werden kann.

Der vorliegenden Erfindung liegt die Aufgabe zugrunde, ein Verfahren der o.g. Art zu entwickeln, mittels welchem ein Gesamtzustand des nuckelnden Säugetieres ermittelt werden kann.

Zur Lösung dieser Aufgabe führen die Merkmale des Patentanspruches 1.

Beim Kontrollieren des Zustandes eines Säugetieres erscheint es grundsätzlich wichtig, dass der Nuckel in seiner Temperatur nicht zu weit von der Körpertemperatur des Säugetieres abweicht. Bei einer zu hohen Abweichung könnten sonst Messergebnisse durch einen gewissen Temperaturschock verfälscht werden. Aus diesem Grunde kann z.B. vorgesehen sein, dass der Nuckel zumindest teilweise erwärmt wird.

Durch die Ermittlung der Körpertemperatur des nuckelnden Säugetieres kann auf den Zustand des Säugetieres geschlossen werden, insbesondere ob es Fieber hat, Stresssituationen ausgesetzt ist od. dgl..

Aus der DE-197 10 342.1 A1 ist bereits bekannt, dem Nuckel Temperatursensoren zuzuordnen. In einer Vorrichtung zur Kontrolle des Zustands eines Säugetieres kann z.B. in dem Nuckel sowohl eine Einrichtung zum Erwärmen des Nuckels, als auch zumindest ein Temperatursensor integriert sein. Durch beide Einrichtungen wird die Temperatur des Nuckels bevorzugt auf eine Temperatur gebracht, die knapp unterhalb der Körpertemperatur des Säugetieres liegt. Liegt beispielsweise die Körpertemperatur bei 40°C, so sollte die Nuckeltemperatur bei etwa 38,5° C liegen. Damit wird vermieden, dass der Nuckel überhaupt erst beim Trinken des Säugetieres auf dessen Temperatur erwärmt wird, was einige Zeit in Anspruch nimmt. Dadurch kann der Temperatursensor besser und genauer auf auch geringere Temperaturunterschiede reagieren.

Nach der vorliegenden Erfindung wird das Nährmittel, insbesondere die Milch, im Bereich des Nuckels nachgewärmt werden. Dies kann in dem Tränkeautomaten, vor der Saugstelle oder in der Saugstelle selbst erfolgen. Wünschenswert wäre es, die Milchtemperatur ebenfalls auf eine Temperatur knapp unter der Körpertemperatur des Säugetieres einzustellen, da dadurch dann keine Schwankungen im bzw. am Nuckel auftreten, die nicht auf die Körpertemperatur des Säugetieres zurückzuführen sind.

Die Temperatursensoren können entfernter von dem eigentlichen Nuckelteil angeordnet werden, damit die Ermittlung der Temperatur nicht durch die Temperatur des Tränkemediums verfälscht wird. Hierzu bietet es sich an, den Nuckel mit einem verbreiterten Basisteil zu versehen, wobei das Basisteil aus hochfestem Material ausgestaltet ist. Durch dieses verbreiterte Basisteil wird verhindert, dass Luft mit angesaugt wird.

Die Ausgestaltung des Nuckels aus bevorzugt zwei Teilen, nämliche dem verbreiterten Basisteil und einem eigentlichen in dem verbreiterten Basisteil steckenden Nuckelteil erlaubt es, dass das eigentliche Nuckelteil, welches weicher ausgestaltet ist, als das Basisteil, auswechselbar ausgebildet werden kann. Hierdurch können Kosten eingespart werden.

Damit die Tiere den Nuckel vorzugsweise komplett ins Maul nehmen und die Umgebungsluft die Temperatursensoren nicht zu stark abkühlt, wird bevorzugt auch das Basisteil vorgeheizt. Dabei liegt die Vorheiztemperatur auch hier knapp unter der Körpertemperatur, so dass beim Saugen die Körpertemperatur des Tieres schneller und sicherer an den Temperatursensoren erreicht wird. Hierdurch werden die Messzeiten verkürzt und es werden mehr verwendbare Messungen erzielt.

Wenn das Tier den Nuckel ganz in das Maul nimmt, leitet die Nuckelspitze das Tränkemedium auch gleich in den Schlund, so dass die Temperatur der Tränke die Messergebnisse nicht beeinträchtigt. Ferner ist daran gedacht, bei den Messvorgängen die Tränkezufuhr zu unterbrechen oder zu drosseln. Zudem kann die Tränkezufuhr in Abhängigkeit einer Nahrungsmitteltemperatur und/oder zur Verlängerung einer Messzeit gedrosselt werden. Bei einer höheren Abweichung der Nuckeltemperatur von der Körpertemperatur des Säugetieres über einen Schwellenwert hinaus kann die Nuckeltemperatur auf eine geringere Temperaturdifferenz zur gemessenen Körpertemperatur des Tieres nachgefahren werden.

Bevorzugt sind mehrere Sensoren an verschiedenen Stellen des Nuckels vorgesehen. Damit werden Fehlmessungen in Verbindung mit entsprechender Datenauswertung durch angesaugte Tränke und/oder Luft vermieden.

Es hat sich ferner als vorteilhaft für das erfindungsgemässe Verfahren erwiesen, die Sensoren, Heizeinrichtungen, Temperatursensoren od. dgl. erst nach oder während der Nahrungsmittelaufnahme des Tieres am Nuckel diesen einzuschieben, damit das Tier durch die entsprechenden eingeschobenen Bauteile nicht vom Nuckeln abgelenkt wird. Dadurch dass das Tier an einem gewöhnlichen Nuckel mit der Nahrungsaufnahme beginnt, bis das Nahrungsmittel vom Tier im Maul aufgenommen wird, ist es durch das Saufen abgelenkt. Erst dann werden bspw. automatisch die Sensoren, Temperatursenoren, Heizelemente od. dgl. in bzw. neben den Nuckel eingeschoben, um die entsprechenden Werte zu ermitteln.

Als Heizelemente können bspw. elektrische, insbesondere elastische Elemente verwendet werden. Es hat sich jedoch auch als vorteilhaft erwiesen, flexible Schläuche od. dgl. mit einem erwärmten Medium, bspw. Wasser in den Nuckel einzusetzen um diesen, oder insbesondere ein Bereich des Temperatursensors zu erwärmen.

Dabei können auch bspw. Heizkanäle, Kammern od. dgl. in die Wandung des Nuckels eingegossen werden, die bspw. mit einem erwärmten Medium durchströmt werden. Ferner soll auch daran gedacht sein, den Nuckel von aussen, insbesondere von extern mit Wärme zu beaufschlagen, wie bspw. mittels Wärmestrahlern, Warmluft od. dgl..

Die vorliegende Erfindung eignet sich besonders bei Saugstellen an Tränkeautomaten und beliebigen Tränkevorrichtungen, an Wassertränken für kaltes und warmes Wasser und Flüsskeiten mit beliebigen Zusätzen, aber auch als Vorrichtung zum Spielen und zum Abreagieren des Saugbedürfnisses.

Weitere Vorteile, Merkmale und Einzelheiten der Erfindung ergeben sich aus der nachfolgenden Beschreibung bevorzugter Ausführungsbeispiele einer zu Durchführung des erfindungsgemässen Verfahrens geeigneten Vorrichtung sowie anhand der Zeichnung; diese zeigt in
Figur 1a einen Längsschnitt durch einen Nuckel;
Figur 1b einen Längsschnitt durch den Nuckel gemäss Figur 1a mit einer Trennwand;
Figur 1c einen Längsschnitt durch den Nuckel gemäss den Figuren 1a und 1b mit eingesetztem Hülsenelement als Sensor;
Figur 1d einen Querschnitt durch den Nuckel gemäss Figur 1c entlang Linie Id-Id;
Figur 1e einen Teillängsschnitt durch einen Sensor im Bereich einer Wandung des Nuckels;
Figur 2 eine Seitenansicht einer Vorrichtung zum Kontrollieren des Zustandes von Säugetieren;
Figur 3 eine Draufsicht auf die Vorrichtung gemäss Figur 2.

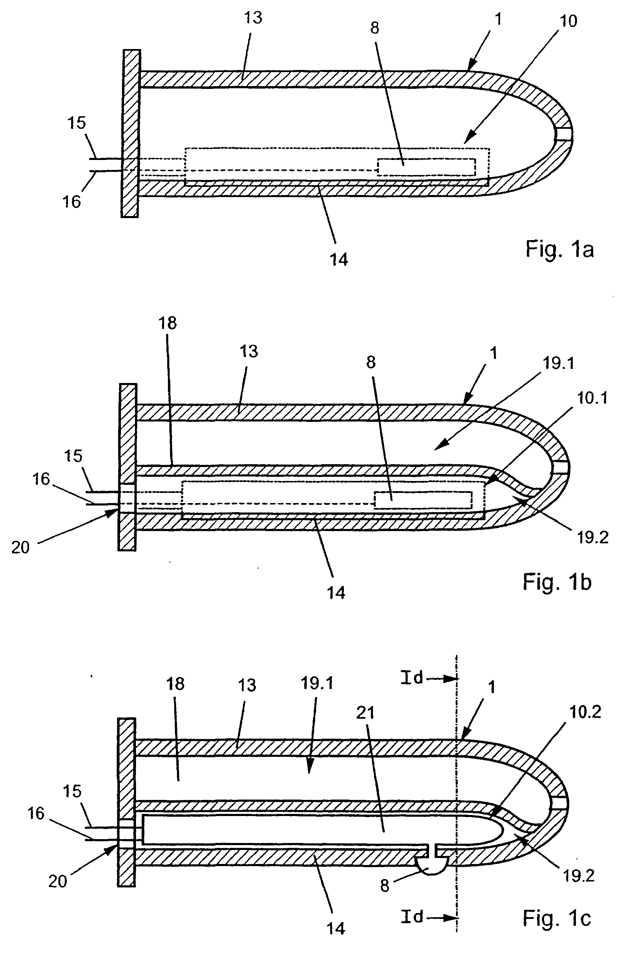

In Figur 1a ist ein handelsüblicher Nuckel 1 dargestellt. In einer Wandung 13 des Nuckels 1 befindet sich ein Heizelement 14, welches, gestrichelt dargestellt, schalenförmig ausgebildet ist. Ferner ist in der Wandung 13 des Nuckels 1 ein Temperatursensor 8 vorgesehen.

Über das Heizelement 14 wird der Nuckel 1 auf eine Temperatur vorgewärmt, die bevorzugt knapp unter der Körpertemperatur des Säugetieres liegt. Über den Temperatursensor 8 wird die Temperatur des Nuckels 1 vor, während und nach dem Saugen des Säugetieres ermittelt, wobei aus den Temperaturdifferenzen auf den Zustand des Säugetieres geschlossen werden kann.

Das Heizelement 14 steht über eine Leitung 15 mit einer entsprechenden Energiequelle in Verbindung. Der Temperatursensor 8 weist einen Anschluss 16 an eine entsprechende Einheit auf, welche die Werte des Temperatursensors 8 übernimmt.

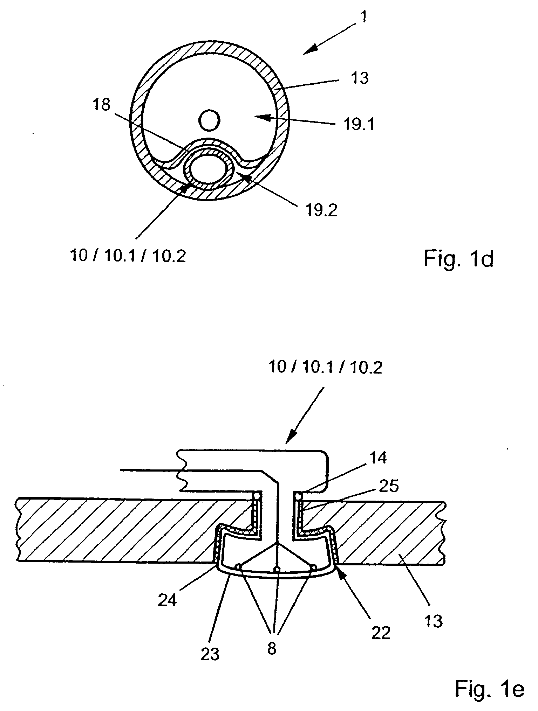

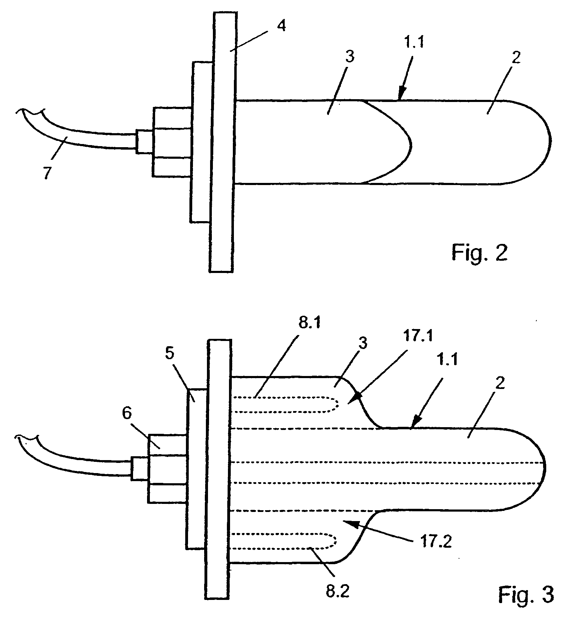

Eine Vorrichtung zum Kontrollieren des Zustandes von Säugetieren gemäss Figur 2 und 3 weist einen Nuckel 1.1 auf, der aus einem Nuckelteil 2 und einem Basisteil 3 besteht. Das Basisteil 3 ist flach ausgebildet und gegenüber dem Nuckelteil 2 verbreitert. Es kann seitliche Kanäle 17.1, 17.2 aufweisen, in welche die entsprechenden Temperatursensoren 8.1, 8.2 aber auch Sensoren 10.1, 10.2 (siehe Figuren 1b, 1c und 1e) einsetzbar sind.

Der Nuckel 1.1 ist bevorzugt in eine Halteplatte 4 eingesetzt und wird an dieser über eine rückwärtige Scheibe 5 sowie eine Mutter 6 gehalten. Mit 7 ist eine Zuleitung für beispielsweise Milch angedeutet.

Gemäss Figur 1b ist der Nuckel 1 mittels einer Trennwand 18 in eine erste Kammer 19.1 und eine zweite Kammer 19.2 unterteilt. Durch die erste Kammer 19.1 strömt das Nahrungsmittel, durch die zweite Kammer 19.2 ist durch die endseitige Öffnung 20 ein Sensor 10.1, ggf. mit Temperatursensor 8 einsetzbar und damit wieder austauschbar.

Durch die Trennwand 18 sind die Kammern 19.1, 19.2 vollständig voneinander getrennt, so dass kein Nahrungsmittel in den Bereich des Sensors 10.1 einströmen kann. Dieser wird vor Nahrungsmitteln geschützt.

Um Verkäsungen, Rückstände in der Kammer 19.1 zu verhindern, ist die Trennwand 18, wie es auch in der querschnittlichen Darstellung in Figur 1d aufgezeigt ist, strömungsbegünstigt in den Randbereichen stirnseitig ausgebildet, so dass keine Rückstände in der Kammer 19.1 an Nahrungsmittel oder an Nahrungsmittelresten verbleiben.

Es hat sich als besonders vorteilhaft erwiesen in die Kammer 19.2 den Sensor 10.1 wiederlösbar ggf. austauschbar einzusetzen, so dass bei Beschädigung des Nuckels 1 und/oder des Sensors 10, 10.1, 10.2 diese Bauteile ausgetauscht werden können und nicht vollständig ersetzt werden müssen. Dabei kann dem Sensor 10.1 ebenfalls in oben beschriebener Weise ein Heizelement 14 zugeordnet sein.

In einem weiteren Ausführungsbeispiel des Nuckels gemäss Figur 1c ist der Sensor 10.2 hülsenartig, als Hülsenelement 21 ausgebildet, welches ggf. mittels Heizelementen 14 beheizbar ist. Dieses Hülsenelement 21 ist in oben beschriebener Weise durch die Öffnung in den Nuckel 1, insbesondere in seine Kammer 19.2 einsetzbar.

Eine Besonderheit des Hülsenelementes 21 ist, wie es insbesondere in Figur 1e aufgezeigt ist, dass ein Vorsprung 24 durch eine Aufnahmeöffnung 22 der Wandung 13 des Nuckels 1 durchgreift, damit eine vorzugsweise gut leitende Oberfläche 23 aus dem Nuckel 1 herausragt.

Diese dient zum exakten Messen und Erfassen der Temperatur des Tiers bei der Nahrungsmittelaufnahme. Dabei kann der Vorsprung 24 eine Mehrzahl von Temperatursensoren 8, verteilt auf der Oberfläche 23 aufweisen, um eine Temperaturänderung und insbesondere auch die Temperatur des Tieres am Nuckel 1 exakt und schnell zu erfassen.

Auch kann dem Sensor 10.1, 10.2, insbesondere dem Vorsprung 24 das Heizelement 14 zugeordnet sein, um die Temperatur annähernd auf die Temperatur des Tieres vorzuheizen, so dass die Temperaturerfassung schneller und exakter erfolgen kann.

Damit keine Temperaturverluste auftreten können, kann der Vorsprung 24 in der Wandung 13 mit einer Isolierung 25 versehen sein.

Es hat sich auch als vorteilhaft erwiesen, die Oberfläche 23 des Vorsprunges 24 linsenartig gewölbt auszubilden, so dass eine Verletzungsgefahr minimiert ist und dennoch ein gutes Kontaktieren und Berühren, insbesondere eine gute Temperaturübertragung gewährleistet ist. Ferner ist von Vorteil bei der vorliegenden Erfindung, dass der Vorsprung 24 knopfartig erweitert aus gebildet ist, welcher in eine entsprechende mit einem Absatz versehene Aufnahmeöffnung 22 passgenau eingreift und auf diese Weise den Sensor 10, 10.1, 10.2 gegenüber der Wandung 13 hält.

Gleichzeitig wird, wie es in den Figuren 1b und 1c dargestellt ist, durch die Trennwand 18 der Sensor 10, 10.1, 10.2 in der Kammer 19.2 fest eingespannt und gehalten.

Durch den Vorsprung 24 wird zusätzlich der Sensor 10, 10.1, 10.2 zentriert gehalten und ist zusätzlich vor herausrutschen aus dem Nuckel 1, insbesondere der Wandung 13 gesichert.

Vorteilhaft ist es auch eine Mehrzahl von derartigen Vorsprüngen 24, verteilt auf die Oberfläche 23, insbesondere die Wandung 13 des Nuckels 1 vorzusehen, um eine Temperaturmessung oder Änderung schnell zu erfassen.

Gemäss Figur 3 befinden sich in dem verbreiterten Basisteil 3 Temperatursensoren 8.1 und 8.2, die nur gestrichelt angedeutet sind.

Nicht erkennbar ist im vorliegenden Ausführungsbeispiel, dass das Nuckelteil 2 und das Basisteil 3 zwei getrennte Elemente sein können, wobei das Nuckelteil 2 austauschbar ist.

## Patentansprüche

1. Verfahren zum Kontrollieren des Zustandes, insbesondere des Gesundheitszustandes, von Säugetieren, insbesondere von landwirtschaftlichen Nutztieren, welche aus einem Nuckel (1), dem ein Temperatursensor (8) zugeordnet ist, ein Nahrungsmittel saugen,
**dadurch gekennzeichnet,**
**dass** das Nährmittel erwärmt oder dessen Temperatur nachgeregelt wird, wobei bei einer höheren Abweichung der Nahrungsmitteltemperatur von der Körpertemperatur des Säugetieres über einen Schwellenwert hinaus die Nahrungsmitteltemperatur auf eine geringere Temperaturdifferenz zur gemessenen Körpertemperatur des Tieres nachgefahren wird.

2. Verfahren nach Anspruch 1, **dadurch gekennzeichnet, dass** das Nährmittel auf einen Wert knapp unter der Körpertemperatur des Säugetieres erwärmt wird.

3. Verfahren nach Anspruch 1 oder 2, **dadurch gekennzeichnet, dass** eine Tränkezufuhr während der Messvorgänge unterbrochen oder gedrosselt wird.

4. Verfahren nach Anspruch 3, **dadurch gekennzeichnet, dass** die Tränkezufuhr in Abhängigkeit einer Nahrungsmitteltemperatur und/oder zur Verlängerung einer Messzeit gedrosselt wird.

## Revendications

1. Procédé pour la surveillance de l'état, en particulier de l'état de santé, de mammifères, en particulier d'animaux d'élevage, qui sucent un aliment d'un téton (1) auquel est associé un capteur de température (8),
**caractérisé par le fait que**
l'élément est réchauffé ou sa température est ajustée, la température de l'aliment étant ramenée, en cas d'un grand écart entre la température de l'aliment et la température du corps du mammifère au-delà d'une valeur de seuil, à une plus petite différence de température par rapport à la température de corps mesurée de l'animal.

2. Procédé selon la revendication 1, **caractérisé par le fait que** l'aliment est réchauffé à une valeur à peine au-dessous de la température de corps du mammifère.

3. Procédé selon la revendication 1 ou 2, **caractérisé par le fait qu'**une alimentation de boisson est interrompue ou étranglée pendant l'opération de mesure.

4. Procédé selon la revendication 3, **caractérisé par le fait que** l'alimentation de boisson est étranglée en fonction d'une température d'aliment et/ou du prolongement d'un temps de mesure.

## Claims

1. Method of verifying the state, more especially the state of health, of mammals, more especially of agricultural livestock, which suckle a nutriment from a teat (1), with which a temperature sensor (8) is associated, **characterised in that** the foodstuff is heated, or the temperature thereof is adjusted, whereby, if the nutriment temperature deviates relatively greatly from the body temperature of the mammal beyond a threshold value, the nutriment temperature is reduced to a lower difference in temperature relative to the measured body temperature of the animal.

2. Method according to claim 1, **characterised in that** the foodstuff is heated to a value just below the body temperature of the mammal.

3. Method according to claim 1 or 2, **characterised in that** a watering supply is interrupted or shut-off during the measuring processes.

4. Method according to claim 3, **characterised in that** the watering supply is shut-off in dependence on a nutriment temperature and/or to extend a measuring time.
